(19) Europäisches Patentamt / European Patent Office / Office européen des brevets

(11) **EP 4 564 630 A1**

(12) **DEMANDE DE BREVET EUROPEEN**

(43) Date de publication:
**04.06.2025 Bulletin 2025/23**

(21) Numéro de dépôt: **24215013.4**

(22) Date de dépôt: **25.11.2024**

(51) Classification Internationale des Brevets (IPC):
**H02J 3/00** (2006.01)   **G06N 3/126** (2023.01)
**H02J 13/00** (2006.01)

(52) Classification Coopérative des Brevets (CPC):
**H02J 13/00002; G06N 3/126; H02J 3/00;**
H02J 2203/20

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **01.12.2023 FR 2313451**

(71) Demandeurs:
• **Electricité de France
75008 Paris (FR)**
• **Enedis
92800 Puteaux (FR)**

(72) Inventeurs:
• **CUSSIGH, Nicolas
92190 MEUDON (FR)**
• **LEMBEYE, Rémi
94250 GENTILLY (FR)**

(74) Mandataire: **Plasseraud IP
104 Rue de Richelieu
CS92104
75080 Paris Cedex 02 (FR)**

(54) **PROCÉDÉ D OPTIMISATION DU PLACEMENT DE CAPTEURS DE TENSION SUR UN RÉSEAU ÉLECTRIQUE PAR ALGORITHME GÉNÉTIQUE**

(57)    Un procédé d'optimisation du positionnement de capteurs configurés pour fournir des mesures de variables électriques dans un réseau électrique comprenant un ensemble de noeuds comprend :

a. une génération aléatoire (E1) d'une population de première génération de solutions correspondant à un ensemble de positions possibles des capteurs au sein de l'ensemble de noeuds du réseau, une solution étant associée à un vecteur, appelé gène, et

b. au moins une itération de reproduction de la population, comprenant une sélection (E3) par tournois de solutions au sein de la population, par tirages aléatoire de couples de solutions dans la population et sélection d'une solution présentant la meilleure performance au sein de chaque couple tiré aléatoirement.

A l'issue (E6) de la ou les itération(s) de reproduction, le procédé comprend un placement (E7) des capteurs au sein du réseau aux positions déterminées par un gène prédominant associé à une performance évaluée maximale au sein des solutions de la population de dernière génération.

FIGURE 2

## Description

### Domaine technique

La présente divulgation relève du domaine de la conduite des réseaux de distribution et de transport d'électricité. Elle s'applique notamment, mais non exclusivement, à l'estimation d'état de tels réseaux, qui est notamment utile pour opérer un réglage de tension en présence de production électrique décentralisée.

### Technique antérieure

Le réglage de tension d'un réseau de distribution en présence de production décentralisée nécessite une estimation fiable des tensions en tout noeud du réseau. La tension en tout noeud du réseau peut notamment être déterminée en appliquant les lois de l'électrotechnique à des mesures réelles fournies par des capteurs de tension positionnés sur des noeuds du réseau de distribution et à des pseudo-mesures calculées à partir d'un modèle de charge des consommateurs et des postes de transformation HTA/BT non instrumentés par des capteurs.

La fiabilité de l'estimation des tensions dépend directement du nombre de capteurs en réseau. Si le nombre de capteurs en réseau est trop faible, il n'est pas possible de garantir le fonctionnement d'un procédé de réglage des tensions car la précision d'estimation de la tension en tout noeud du réseau ne sera pas conforme aux contraintes techniques, à savoir un écart maximum de 1% entre l'estimation de la tension et la valeur réelle, non connue, de cette tension. Or il n'est pas possible, pour des raisons de coût, d'instrumenter de très nombreux points de mesure sur un réseau de distribution.

Il est donc important, étant donné un nombre limité de capteurs de tension à disposition d'un exploitant du réseau, d'optimiser leur placement sur le réseau pour garantir une bonne estimation d'état.

A ce jour, le placement des capteurs est souvent réalisé à dire d'expert, ce dernier utilisant ses connaissances électrotechniques pour obtenir un placement efficient. Ce placement peut être pertinent, mais il n'est pas toujours optimal, notamment parce qu'il est impossible pour l'expert de tester de manière exhaustive toutes les combinaisons de positionnements de capteurs possibles sur le réseau. En outre, un tel placement de capteurs à dire d'expert est souvent long à mettre en place. Une telle méthode n'est en outre pas généralisable en cas de passage à l'échelle, dans le cas où l'exploitant du réseau de distribution souhaiterait placer des capteurs pour tous les départs du réseau, ce qui nécessiterait de faire appel à de très nombreux experts. On rappelle en effet qu'à la connexion entre le réseau de transport et le réseau de distribution, se situe un poste HTB/HTA, constitué d'un ou de plusieurs transformateurs derrière chacun desquels partent plusieurs lignes permettant de relier plusieurs consommateurs et producteurs. On appelle « départ » une de ces lignes et tout ce qu'elle relie.

Le document de brevet FR 3 006 818 A1 au nom du Demandeur décrit un procédé itératif permettant de déterminer un nombre minimum de capteurs à installer dans un réseau et leur position pour garantir une estimation des tensions en tous noeuds du réseau qui soit suffisamment fiable. Un tel procédé repose sur une comparaison d'une première série de valeurs simulées de variables électriques du réseau, par simulation de son fonctionnement, et d'une deuxième série de valeurs estimées de ces variables, correspondant à des mesures de capteurs théoriques, obtenues par estimation d'état à partir d'un sous-ensemble de la première série de valeurs simulées. En cas de divergence inférieure à une valeur seuil, des capteurs sont installés dans le réseau aux emplacements des capteurs théoriques. Dans le cas contraire, le procédé est réitéré en faisant évoluer le sous-ensemble de valeurs correspondant à des mesures de capteurs théoriques.

Un tel procédé est intéressant en ce qu'il permet de garantir la fiabilité de l'estimation d'état associée à un positionnement donné de capteurs dans le réseau. Cependant, il ne permet pas de garantir que ce positionnement soit optimal. En outre, la recherche d'un positionnement adéquat peut s'avérer coûteuse en temps, compte tenu du caractère itératif du procédé, qui nécessite d'explorer successivement et aléatoirement un ensemble de configurations de positions de capteurs de tension, ce qui peut s'avérer fastidieux.

Le document de brevet CN107563550A propose une méthode d'estimation d'état en temps réel dans un réseau de distribution d'électricité, comprenant notamment des producteurs d'énergie éolienne et d'énergie photovoltaïque. Cette méthode d'estimation d'état repose sur l'utilisation d'un ensemble de capteurs de tension. Les mesures effectuées par ces capteurs permettent de reconstituer les tensions sur l'ensemble du réseau.

Ce document évoque en outre brièvement l'idée d'utiliser un algorithme génétique pour optimiser le positionnement des capteurs de tension dans le réseau de distribution électrique. On rappelle que les algorithmes génétiques appartiennent à la famille des algorithmes évolutionnistes. Leur but est d'obtenir une solution approchée à un problème d'optimisation, lorsqu'il n'existe pas de méthode exacte ou que la solution est inconnue, pour le résoudre en un temps raisonnable. Les algorithmes génétiques utilisent la notion de sélection naturelle et l'appliquent à une population de solutions potentielles au problème donné (en l'espèce, les positions de capteurs de tensions évaluées).

Bien que peu de détails soient donnés dans ce document de l'art antérieur quant aux détails d'implémentation de cet algorithme génétique, il apparaît néanmoins que la méthode décrite d'optimisation de la position des capteurs de tension présente plusieurs inconvénients. En effet, la méthode proposée ne permet notamment pas d'obtenir une solution au problème du positionnement optimal des capteurs de tension avec un nombre contraint de capteurs de tension à disposition par l'exploitant du réseau. Or, ces capteurs sont souvent en nombre limité et, il est important de tenir compte de cette contrainte opérationnelle lors de l'optimisation de leur placement en différents noeuds du réseau. En outre, cette méthode ne garantit pas une exploration suffisante de l'espace des solutions possibles, et peut donc converger vers un optimum local, qui donnera, en terme d'estimation d'état, une réponse sous-optimale en termes de fiabilité et de précision. Enfin, cette méthode apparaît sous-optimale en ce qu'elle ne tient pas compte de la topologie du réseau considéré.

Il existe donc un besoin d'une technique d'optimisation du positionnement de capteurs dans un réseau électrique qui ne présente pas ces différents inconvénients de l'art antérieur.

**Résumé**

La présente divulgation vient améliorer la situation.

Il est proposé un procédé d'optimisation du positionnement de capteurs dans un réseau électrique comprenant un ensemble de noeuds, les capteurs étant configurés pour fournir des mesures de variables électriques du réseau. Un tel procédé comprend :

a. une génération aléatoire d'une population de première génération de solutions correspondant à un ensemble de positions possibles des capteurs au sein de l'ensemble de noeuds du réseau, une solution étant associée à un vecteur, appelé gène, représentatif des positions de capteurs au sein du réseau, et

b. au moins une itération de reproduction de la population, produisant à partir d'une population de génération de rang $i \geq 1$ une population de génération de rang i+1, la reproduction comprenant :

i. Une évaluation d'une performance des solutions de la population de la génération de rang i ;

ii. Une sélection par tournois de solutions au sein de la population de la génération de rang i, par tirages aléatoire de couples de solutions dans la population et sélection d'une solution présentant la meilleure performance au sein de chaque couple tiré aléatoirement ;

iii. Un croisement d'au moins certains couples de solutions sélectionnées générant chacun deux solutions filles ;

iv. Une production d'une population de génération de rang i+1 comprenant au moins certaines solutions sélectionnées par tournois de la population de génération de rang i, les solutions filles, et des solutions générées aléatoirement, la population de génération de rang i+1 comprenant le même nombre de solutions que la population de génération de rang i ;

A l'issue des itérations de reproduction, un tel procédé comprend un placement des capteurs au sein du réseau aux positions déterminées par un gène prédominant associé à une performance évaluée maximale au sein des solutions de la population de dernière génération.

Selon un autre aspect, il est proposé un réseau électrique comprenant un ensemble de noeuds sur au moins certains desquels sont placés des capteurs configurés pour fournir des mesures de variables électriques du réseau, le positionnement des capteurs étant optimisé par mise en oeuvre du procédé tel que décrit précédemment.

Selon un autre aspect, il est proposé un programme informatique comportant des instructions pour la mise en oeuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en oeuvre, indépendamment les unes des autres ou en combinaison les unes avec les autres :

La reproduction comprend également une mutation du gène d'au moins certaines des solutions filles.

La reproduction comprend également une mutation du gène d'au moins certaines des solutions sélectionnées n'ayant pas subi de croisement.

Le gène est un vecteur contenant les positions de capteurs au sein du réseau, classées par distance à un noeud le plus amont dans le réseau, et de longueur égale à un nombre des capteurs.

L'évaluation d'une performance d'une solution de la population de la génération de rang i met en oeuvre un calcul d'une fonction objectif définie par :

$$Perf(sol) = \sum_{n=1}^{N} \max \left( \left| \frac{loadflow(n) - estimation(n,sol)}{loadflow(n)} \right| \right)$$

, où *Perf* désignela performance de la solution *sol, N* est un nombre de points de fonctionnement étudiés, *loadflow*(*n*) associe à un point de fonctionnement n la valeur des variables électriques des noeuds dudit réseau calculées à partir de données de production et de consommation connues pour ledit réseau et *estimation(n, sol)* désigne pour le point de fonctionnement n la valeur des variables électriques des noeuds du réseau estimées à partir des mesures fournies par les capteurs placés à l'ensemble de positions définies par le gène de la solution *sol.* Une solution présente une performance d'autant meilleure qu'elle minimise la valeur de la fonction objectif calculée.

Le croisement de couples de solutions sélectionnées met en oeuvre un enjambement simple ou un enjambement double des gènes des solutions choisies, de manière équiprobable à chaque couple de solutions sélectionnées.

La mutation du gène d'une solution met en oeuvre un déplacement d'au moins un des capteurs d'un noeud initial vers un noeud final du réseau situé dans un voisinage du noeud initial, selon une probabilité décroissant avec une distance du noeud final par rapport au noeud initial.

La reproduction de population est itérée jusqu'à atteindre une génération de rang j= 0,15*Nb_sol*Nb_cap, où Nb_sol désigne le nombre de solutions de la population et où Nb_cap désigne le nombre de capteurs.

## Brève description des dessins

D'autres caractéristiques, détails et avantages apparaîtront à la lecture de la description détaillée ci-après, et à l'analyse des dessins annexés, sur lesquels :

**Fig. 1**

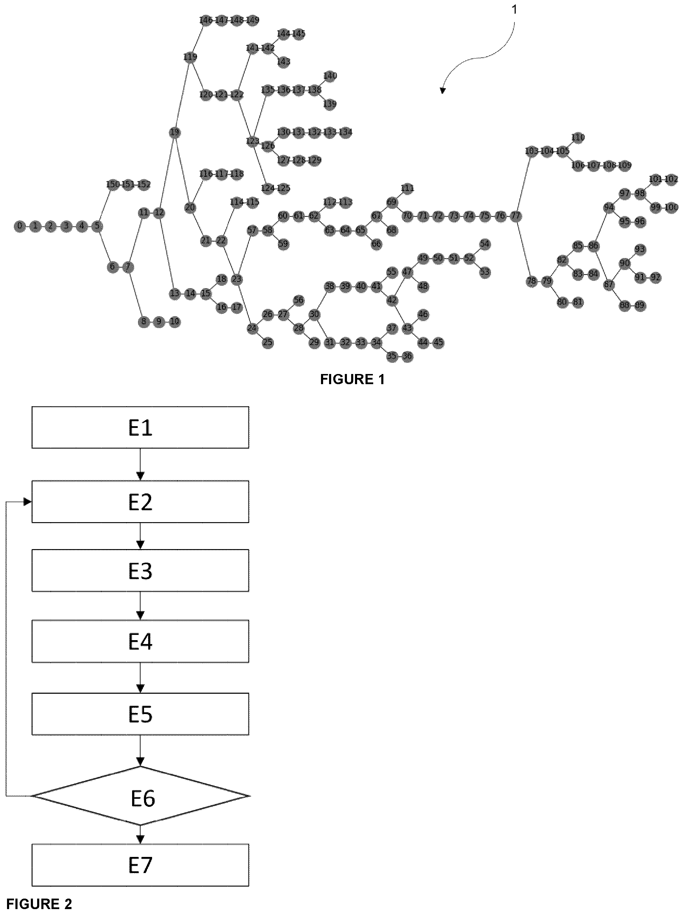

[Fig. 1] illustre un réseau de distribution électrique selon un mode de réalisation.

**Fig. 2**
[Fig. 2] illustre un procédé d'optimisation du positionnement de capteurs de tension dans un réseau de distribution pour le réglage de tension en présence de production décentralisée selon un mode de réalisation.

**Fig. 3**

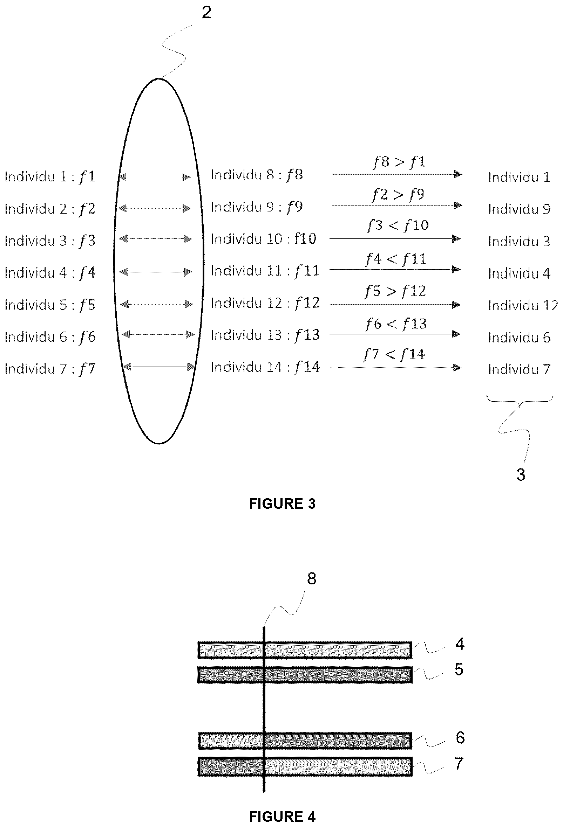

[Fig. 3] illustre une sélection par tournois de solutions dans le cadre du procédé d'optimisation de la figure 2 selon un mode de réalisation.

**Fig. 4**
[Fig. 4] illustre le croisement de solutions sélectionnées avec enjambement simple dans le cadre du procédé d'optimisation de la figure 2 selon un mode de réalisation.

**Fig. 5**

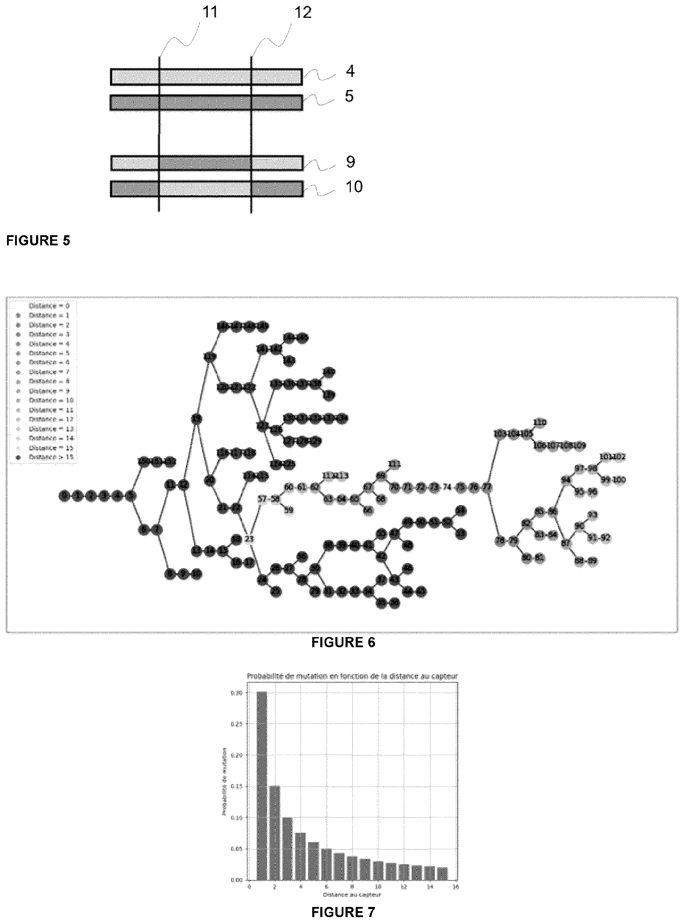

[Fig. 5] illustre le croisement de solutions sélectionnées avec enjambement double dans le cadre du procédé d'optimisation de la figure 2 selon un mode de réalisation.

**Fig. 6**
[Fig. 6] illustre le principe de mutation de gènes dans le cadre du procédé d'optimisation de la figure 2 selon un mode de réalisation.

**Fig. 7**
[Fig. 7] présente une courbe représentative de la probabilité de mutation en fonction de la distance au capteur dans le cadre du procédé d'optimisation de la figure 2 selon un mode de réalisation.

**Fig. 8**

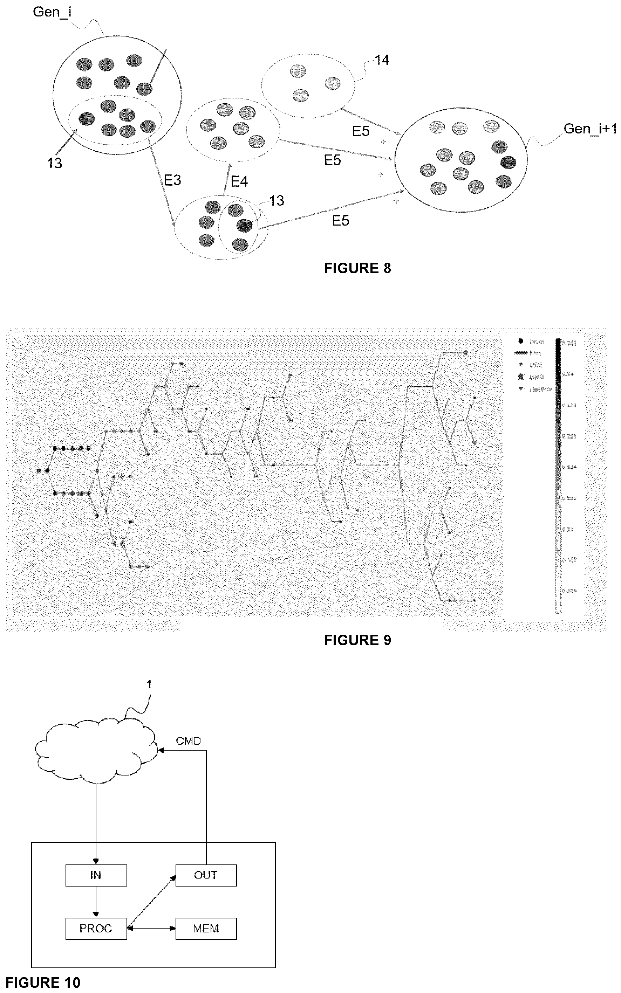

[Fig. 8] présente un schéma synoptique de la génération d'une population de génération de rang n+1 à partir d'une population de génération de rang n dans le cadre du procédé d'optimisation de la figure 2 selon un mode de réalisation.

**Fig. 9**
[Fig. 9] montre un exemple de placement de capteurs obtenu par application du procédé d'optimisation de la figure 2 selon un mode de réalisation.

**Fig. 10**
[Fig. 10] illustre schématiquement la structure d'un dispositif d'optimisation du positionnement de capteurs configuré pour mettre en oeuvre le procédé selon la figure 2.

**EP 4 564 630 A1**

**Description des modes de réalisation**

Il est maintenant fait référence à la figure 1, qui illustre un réseau électrique référencé 1. Un tel réseau 1 peut être un réseau de transport, qui achemine l'électricité depuis les centres de production jusqu'aux grands sites industriels et aux réseaux de distribution, ou un réseau de distribution qui permet de transporter l'énergie électrique à l'échelle locale, des centres de distribution vers le client final.

Un tel réseau 1 comprend un ensemble de noeuds organisés selon une structure arborescente depuis un noeud source. Chaque ramification de la topologie du réseau comprend un ou plusieurs noeuds, qui peuvent correspondre à des postes HTA/BT, des organes de manoeuvre, des consommateurs ou encore des producteurs décentralisés. Dans l'exemple de la figure 1, le noeud source porte le numéro « 0 », et chacun des noeuds de la structure arborescente porte un numéro, qui s'incrémente de proche en proche le long d'une branche de l'arborescence. Le réseau électrique de la figure 1 comprend par exemple 153 noeuds.

On suppose que l'on dispose de certaines données et informations sur le réseau électrique 1, et notamment :

- la topologie du départ étudié, avec notamment la position des capteurs déjà présents et des Dispositifs d'Echange d'informations d'Exploitation (DEIE), qui permettent la téléconduite et la télésurveillance des installations de production décentralisées ;
- des données de production et de consommation sur le réseau 1. Ces données doivent être suffisamment nombreuses et variées pour garantir une certaine exhaustivité des situations rencontrées sur le réseau 1.

Connaissant ces différents éléments, on propose, dans un mode de réalisation, d'optimiser le placement de capteurs dans le réseau 1 selon un procédé qui repose sur l'utilisation d'un algorithme génétique, dont le schéma synoptique général est illustré en figure 2.

Au cours d'une première étape référencée E1, on procède à une génération aléatoire d'une population de première génération de solutions de positionnement de capteurs dans le réseau 1. Chaque solution de cette population correspond à un ensemble de positions possibles des capteurs au sein de l'ensemble de noeuds du réseau 1. Chaque solution est associée à un vecteur, appelé gène, représentatif des positions des capteurs au sein du réseau 1. Par exemple, le gène de l'une de ces solutions s'exprime sous la forme [0, 123, 40, 77, 100]. La longueur du gène correspond au nombre de capteurs que l'on peut disposer dans le réseau 1, soit cinq dans cet exemple. Chaque composante du vecteur contient le numéro de l'un des noeuds du réseau 1 sur lequel on propose de placer un capteur selon cette solution, ces noeuds étant ordonnés dans le vecteur selon leur distance au noeud source « 0 ». Dans cet exemple, la solution associée au gène [0, 123, 40, 77, 100] correspond à une solution dans laquelle cinq capteurs sont respectivement placés sur les noeuds « 0 », « 123 », « 40 », « 77 » et « 100 » du réseau 1. Un tel encodage du gène par position de capteur est bien adapté au problème de l'optimisation du positionnement de capteurs dans un réseau de structure arborescente, notamment en ce qu'il permet de garder la structure topologique du réseau et d'en tirer parti dans la résolution du problème d'optimisation. Cette façon de représenter une solution sous forme vectorielle est notamment beaucoup mieux adaptée au problème considéré que ne pourrait l'être un encodage binaire, de type [1, 0, 0, 0, ...1, 0, 1, 0, 0] dans lequel la longueur du vecteur serait égale au nombre de noeuds dans le réseau 1, et dans lequel chaque composante du vecteur pourrait prendre une valeur 0 ou 1, en fonction de l'absence ou non de capteurs sur le noeud considéré.

L'algorithme génétique mis en oeuvre dans le cadre du procédé d'optimisation illustré en figure 2 utilise des mécanismes de la sélection naturelle pour que la population des solutions considérées (i.e. les positions de capteurs considérées) s'améliore avec le temps, en ne conservant que les solutions les plus performantes, qui pourront transmettre leurs « gènes » aux générations suivantes. Il est donc nécessaire d'évaluer la performance de chacune des solutions d'une population. C'est ce qui est fait au cours d'une étape référencée E2.

En effet, afin de comparer les différentes positions de capteurs, il faut pouvoir évaluer leur performance afin de la maximiser, et ainsi obtenir la meilleure estimation d'état du réseau 1. En l'occurrence, on cherche à minimiser l'écart entre l'estimation d'état obtenue avec la position de capteurs donnée et une situation de référence obtenue via un « loadflow ». On rappelle qu'un loadflow est un calcul numérique des flux énergétiques dans un réseau électrique permettant d'obtenir la valeur d'une variable électrique, par exemple la tension sur tous les noeuds du réseau, ou les puissances actives et réactives sur chaque tronçon du réseau. Le loadflow est calculé en prenant en compte les consommations et productions des différents éléments du réseau ainsi que les caractéristiques des lignes, selon une technique connue de l'homme du métier que l'on ne détaillera donc pas ici plus avant.

Dans un mode de réalisation, le procédé d'optimisation de la figure 2 a pour objectif de minimiser la fonction objectif définie comme suit :

**5**

[Math. 1]

$$Perf(sol) = \sum_{n=1}^{N} \max \left( \left| \frac{loadflow(n) - estimation(n, sol)}{loadflow(n)} \right| \right)$$

où *Perf* désigne la performance de la solution *sol, N* le nombre de points de fonctionnement étudiés, et les fonctions *loadflow*(*n*) et *estimation* (*n, sol*) associent à chaque point de fonctionnement la tension des noeuds du réseau étudié calculée respectivement à l'aide d'un loadflow et d'une estimation d'état pour laquelle le placement des capteurs de tension est donné par la solution *sol.*

Dans un mode de réalisation, cette fonction objectif repose sur l'utilisation de points de fonctionnement, c'est-à-dire de niveaux de production et de consommation sur le réseau, intelligemment répartis sur les différents producteurs et charges du réseau. Dans un autre mode de réalisation, cette fonction objectif repose sur l'utilisation de N pas de temps.

On calcule ensuite la valeur absolue de l'écart relatif entre ces deux états du réseau, pour laquelle on garde l'écart relatif maximum. On somme enfin pour tous les points de fonctionnement ou pas de temps.

La position optimale des capteurs est celle qui minimisera cette fonction objectif.

Dans un mode de réalisation où l'on s'intéresse plus spécifiquement à la tension en chacun des noeuds du réseau 1, cette fonction objectif peut encore s'exprimer :

[Math. 2]

$$J = \sum_{i=0}^{N_p} max \left( \left( \frac{|V_n^i - V_{est,n}^i|}{V_n^i} \right)_{n=[0,1,...,N_n]} \right)$$

Où $N_n$ désigne le nombre de noeuds du réseau, $N_p$ désigne le nombre de points de fonctionnement, Vn désigne la tension réelle au noeud n pour le point de fonctionnement i et $V_{est,n}^i$ désigne la tension estimée au noeud n pour le point de fonctionnement i.

Cette fonction objectif étant définie et les données d'entrées étant connues, il est possible de passer à l'optimisation, c'est-à-dire à la recherche de la solution optimale, selon un procédé itératif correspondant à la répétition des étapes successives E2 à E6 d'évaluation, de sélection, de croisement et mutation, de production de la génération suivante et de test de fin.

Chaque solution de la population de première génération générée lors de l'étape E1 possède, comme indiqué ci-avant, un gène, qui correspond à une représentation vectorielle des capteurs dans le réseau, et une performance, calculée lors de l'étape E2. La performance d'une solution est inversement proportionnelle à la valeur de la fonction objectif pour la position de capteurs sur le réseau 1 donnée par son gène. Ainsi, plus une solution est performante, et plus elle minimise la valeur de la fonction objectif.

Dans un mode de réalisation, le nombre de solutions d'une population est fixé et se conserve de génération en génération. Il peut être fixé par l'utilisateur au lancement de l'algorithme. Par exemple, une population de 64 individus, ou solutions, a donné des résultats satisfaisants.

Après évaluation de la performance de chaque solution de la population, on procède à la reproduction de la population. Pour ce faire, on opère tout d'abord, au cours de l'étape référencée E3, une sélection des solutions qui va permettre d'alimenter la génération suivante de la population.

Dans un mode de réalisation, cette sélection repose sur l'utilisation d'une logique de tournois référencés 2, illustrée schématiquement en figure 3. Pour ce faire, on tire aléatoirement des couples d'individus dans la population, on compare leurs performances deux à deux et on garde à chaque fois le meilleur des deux individus. De fait, le meilleur individu de la génération de rang i est assuré d'être conservé pour la génération suivante de rang i+1 ; de même, on est assuré d'éliminer le moins bon individu de la génération de rang i. Cela garantit par ailleurs de ne pas conserver que les meilleurs individus mais aussi des individus « moyens » pour éviter les optimums locaux. Ainsi, cette logique de sélection par tournois permet une bonne exploration de l'espace de solutions, meilleure notamment qu'une sélection par roulette qui présente deux inconvénients principaux : d'une part, elle ne permet pas de garantir de garder le meilleur individu pour la génération suivante et d'autre part, elle peut entraîner une convergence de l'algorithme vers un minimum local dans le cas où une solution présente une performance bien meilleure que les autres.

Ainsi, dans l'exemple de la figure 3 pour cette étape E3, un tournoi 2 est organisé entre la solution « 1 », de performance f1 et la solution « 8 », de performance f8, qui conduit à la sélection de la solution « 8 » dont la performance f8, évaluée lors de l'étape E2, est supérieure à celle f1 de la solution « 1 ». De même, des tournois sont organisés entre les solutions « 2 » et « 9 », entre les solutions « 3 » et « 10 », entre les solutions « 4 » et « 11 », entre les solutions « 5 » et « 12 », entre les solutions « 6 » et « 13 » et entre les solutions « 7 » et « 14 », qui conduisent à la sélection référencée 3 des solutions « 9 », « 3 », « 4 », « 12 », « 6 » et « 7 » qui remportent chacune leur tournoi.

Ainsi, à l'issue de l'étape E3, on sélectionne 50% des solutions de la population considérée.

Ces solutions sélectionnées référencées 3 sont utilisées lors de l'étape ultérieure E4 de croisement comme parents de nouvelles solutions filles, et éventuellement de mutation, qui vont alimenter la population de génération suivante.

Ces solutions sélectionnées font également l'objet d'un second tournoi, afin de déterminer les solutions qui pourront directement être intégrées dans la génération suivante de population de solutions. Ce second tournoi repose également sur un tirage aléatoire de couples de solutions, parmi les solutions sélectionnées : pour chaque tournoi, on conserve celle des deux solutions sélectionnées qui présente la meilleure performance, i.e. qui minimise le plus la fonction objectif. A l'issue de ce second tournoi, on sélectionne donc 25% des solutions de la population considérée, qui viennent directement alimenter la population de génération suivante.

L'étape référencée E4 est une étape de mutation et de croisement des solutions sélectionnées par tournois lors de l'étape E3.

On réalise un croisement deux à deux de certaines des solutions sélectionnées lors de l'étape E3, comme illustré sur les figures 4 et 5. Chaque couple de solutions, appelées solutions parentes référencées 4 et 5, donne naissance à deux solutions filles, qui sont obtenues par enjambement simple (solutions filles référencées 6 et 7 sur la figure 4) ou double (solutions filles référencées 9 et 10 sur la figure 5) de leurs gènes.

Ce croisement, également appelé en anglais « crossover », permet de mélanger les gènes de deux solutions parentes 4 et 5, pour donner une solution fille. Le gène d'une solution fille est obtenu en prenant une partie du gène de la première solution parente référencée 4 (donc certaines positions de capteurs) avec une partie du gène de la seconde solution parente référencée 5 (donc certaines autres positions de capteurs) d'un couple de solutions 4, 5 tirées aléatoirement. On utilisera un crossover simple (une seule coupure 8 dans le gène, illustré en figure 4) ou un crossover double (deux coupures 11 et 12 dans le gène, illustré en figure 5), choisis de manière équiprobable à chaque couple d'individus.

Ce croisement s'opère avec une certaine probabilité définie, qui, dans un mode de réalisation, est fixée à 0,8. Ainsi, on a 80% de chance de réaliser un croisement sur une paire de solutions parentes : les solutions parentes qui ne subissent pas de croisement peuvent faire l'objet d'une mutation au cours de l'étape ultérieure, sans avoir été croisées.

Par exemple, le croisement par crossover simple d'une solution parente référencée 4 dont le gène s'exprime [0, 123, 40, 77, 100] avec une solution parente référencée 5 dont le gène s'exprime [5, 126, 47, 104, 102] peut donner deux solutions filles référencées 6, 7 dont les gènes s'expriment [0, 123, 47, 104, 102] et [5, 126, 40, 77, 100].

Au cours de cette étape E4, la mutation du gène d'une solution peut également apparaître avec une certaine probabilité définie. Cette mutation provoquée intentionnellement permet d'explorer l'espace des solutions. Dans un mode de réalisation, on fixe cette probabilité entre 0,2 et 0,7 environ. Dans un mode de réalisation avantageux, cette probabilité est fixée à 0,4, ce qui signifie que chaque capteur mobile a une probabilité de muter, et donc de changer de position, de 0,4 environ.

En cas de mutation du gène d'une solution, cette mutation déplace un ou plusieurs des capteurs, de leur position initiale définie dans le gène de la solution, vers une nouvelle position finale dans l'un des noeuds de leurs voisinages. Par exemple, le gène de la solution [0, 123, 40, 77, 100] peut muter en [0, 135, 40, 77, 100], le noeud « 123 » étant directement voisin du noeud « 135 » dans le réseau 1 de la figure 1.

Comme illustré par la courbe de la figure 7, on choisit d'imposer une probabilité de mutation décroissante avec la distance du noeud final par rapport au noeud initial, jusqu'à une distance maximale de 15 noeuds. La figure 6 illustre cette probabilité de mutation pour un gène qui porterait une information de positionnement de capteur sur le noeud « 74 ». La probabilité que ce gène mute en « 73 » ou en « 75 » est la plus forte, et égale à 0,3, mais décroît au fur et à mesure que l'on s'éloigne du noeud « 74 » selon la topologie du réseau, et devient nulle au-delà du noeud « 23 », qui est à une distance de quinze du noeud « 74 ».

Cette probabilité de muter en fonction de la distance au noeud permet de respecter la topologie du réseau et d'explorer le voisinage des solutions, ce qui permet une bonne convergence vers le minimum local autour d'une solution. Elle donne notamment des résultats plus satisfaisants qu'une probabilité de muter qui serait fixée par exemple à 0,01 pour chacun des bits d'un gène correspondant à un encodage binaire, de type [1, 0, 0, 0, ...1, 0, 1, 0, 0].

Cette mutation s'opère de préférence sur les solutions filles générées lors du croisement de l'étape E4. Les solutions sélectionnées lors de l'étape E3 qui n'auraient pas été utilisées comme solutions parentes lors du croisement peuvent également subir une mutation de leur gène, avant d'être intégrées dans la population de génération suivante.

Par cette opération de croisement et mutation E4, les 50% de solutions sélectionnées par tournois lors de l'étape E3 permettent de générer autant de solutions filles, qui constituent 50% de la population de génération suivante.

Sur la figure 2, l'étape référencée E5 correspond à une étape de production d'une population de solutions de génération de rang i+1, Gen_i+1, à partir de la population de solutions de génération de rang i, Gen_i. Elle est illustrée sous forme schématique sur la figure 8.

Comme indiqué ci-avant, la population de chaque génération est définie par un nombre donné de solutions, fixé par l'utilisateur au lancement de l'algorithme, et par exemple égal à 64 pour une optimisation et une convergence satisfaisantes du procédé selon un mode de réalisation. Chaque nouvelle génération, Gen_i+1, est composée de solutions directement issues de la génération précédente (via deux tournois successifs opérés lors de l'étape E3), de solutions filles créées par crossover des solutions parentes et éventuelle mutation lors de l'étape E4, et de nouvelles solutions aléatoires, référencées 14, pour apporter de la « diversité génétique » et ne pas converger vers un optimum local mais non global. Comme on le voit sur la figure 8, la meilleure solution de la génération Gen_i, référencée 13, est assurée, grâce à la sélection par tournois E3, de toujours figurer dans la génération suivante Gen_i+1. Dans un mode de réalisation avantageux, on choisit de peupler la nouvelle génération, Gen_i+1, de 25% de solutions sélectionnées lors de l'étape E3, de 50% de solutions filles issues de l'étape E4 et de 25% de nouvelles solutions aléatoires, ces proportions ayant donné des résultats satisfaisants en termes d'optimisation du positionnement des capteurs et de vitesse de convergence de l'algorithme génétique.

Lors de l'étape référencée E6, on détermine s'il convient de mettre fin aux itérations de reproduction de la population, ou si cette population de génération de rang i+1, nouvellement générée au cours de l'étape E5, doit être utilisée à son tour pour itérer les étapes E2 à E5 décrites ci-avant.

Par exemple, les étapes E2 à E5 sont itérées jusqu'à ce qu'un nombre suffisant de générations successives aient été produites au cours des cycles d'itérations pour assurer une bonne convergence de l'algorithme vers la solution optimale. Dans un mode de réalisation, ce nombre de générations successives est j= 0,15*Nb_sol*Nb_cap, où Nb_sol désigne le nombre de solutions de la population et où Nb_cap désigne le nombre de capteurs . Par exemple, pour une population de 64 individus et un nombre maximum de cinq capteurs, les étapes E2 à E5 sont itérées jusqu'à produire une génération de rang j=48. Ce nombre de générations successives constitue un bon compromis entre une convergence satisfaisante de l'algorithme vers la solution optimale et un temps de calcul suffisamment modéré du nombre de générations de population successives.

Lors de l'étape référencée E7, on place alors les capteurs au sein du réseau 1 aux positions déterminées par un gène prédominant au sein des solutions de la population de dernière génération. Le gène prédominant au sein de la dernière génération est celui qui minimise la fonction objectif définie et évaluée au cours de l'étape E2.

Un exemple de positionnement optimal de capteurs obtenu par mise en oeuvre du procédé de la figure 2 selon un mode de réalisation est illustré en figure 9, sur laquelle le positionnement optimal des capteurs est indiqué par un triangle.

La figure 10 illustre schématiquement la structure d'un dispositif DIS d'optimisation du positionnement de capteurs dans un réseau électrique 1. Un tel dispositif DIS comprend un circuit de traitement connecté au réseau électrique pour la mise en oeuvre du procédé d'optimisation présenté ci-avant.

En référence à la figure 10, ce circuit de traitement peut comporter :

- une interface d'entrée IN de signaux reçus du réseau électrique, permettant au circuit de traitement de recevoir les données et informations sur le réseau, telles que la topologie du départ étudié, la position des capteurs déjà présents et des DEIE, ainsi que des données de production et de consommation sur le réseau 1,
- une mémoire MEM apte à stocker au moins temporairement des valeurs de tension, des vecteurs de solutions ainsi que leurs performances, ainsi que des données d'instruction d'un programme informatique pour la mise en oeuvre du procédé ci-avant. La mémoire MEM peut être de type ROM (de l'anglais « Read Only Memory ») ou RAM (de l'anglais « Random Access Memory ») ou encore Flash,
- un processeur PROC capable de coopérer avec la mémoire MEM et en particulier de lire les instructions stockées dans la mémoire pour exécuter notamment les étapes nécessaires à la mise en oeuvre du procédé défini ci-avant. Ainsi, le processeur PROC peut notamment calculer la performance des solutions, opérer des croisements et des mutations, réaliser une sélection par tournois, etc. Et
- une interface de sortie OUT coopérant avec le processeur PROC pour délivrer le résultat du procédé d'optimisation sous la forme d'une solution optimale de positionnement de capteurs, destinée à être restituée sur une interface homme/machine (affichage sur un écran par exemple), et pour envoyer des commandes CMD d'exécution d'un positionnement de capteurs selon la solution optimale restituée dans le réseau électrique.

La figure 10 illustre seulement une manière particulière, parmi plusieurs possibles, de réaliser un dispositif d'optimisation du positionnement de capteurs dans un réseau électrique, afin qu'il effectue les étapes du procédé détaillé ci-avant, en relation avec les figures 2 à 9 (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

## Application industrielle

Les présentes solutions techniques peuvent trouver à s'appliquer notamment dans tout réseau de distribution ou de transport d'électricité. Elles permettent de s'affranchir de la présence d'un expert pour prévoir une installation de capteurs, ce qui permet donc un gain de temps substantiel. En outre, les résultats obtenus lors de tests sur une dizaine de réseaux existants ont permis de confirmer une bonne convergence vers une solution optimale, même avec un nombre limité de capteurs (par exemple trois capteurs seulement pour un réseau de 150 noeuds environ), ce qui représente donc un gain financier important.

La mise en oeuvre de telles solutions d'optimisation permet de réaliser une estimation d'état optimale à nombre fixe de capteurs, ce qui permet de maximiser l'efficacité des leviers liés à l'estimation, comme les Fonctions Avancées de Réseau qui traitent de la tension (FAR-U), et donc un gain financier pour l'opérateur du réseau.

Il est également possible de réaliser plusieurs optimisations successives, avec des nombres de capteurs différents (par exemple, un, puis deux, puis trois capteurs, etc.) ; une analyse statistique sur les résultats obtenus avec ces différentes optimisations permet de déterminer le nombre de capteurs nécessaires optimum pour obtenir par exemple une précision à 1% sur l'estimation de la tension. On réalise alors une estimation d'état optimale à nombre de capteurs variable en incluant cette itération sur les capteurs et ce processus de validation.

## Liste des signes de référence

- 1 : réseau électrique
- 2 : tournoi
- 3 : solutions sélectionnées
- 4, 5 : solutions parentes
- 6, 7 : solutions filles par crossover simple
- 8 : point de croisement simple
- 9, 10 : solutions filles par crossover double
- 11, 12 : points de croisement double
- 13 : meilleure solution
- 14 : solutions générées aléatoirement
- E1 : génération de population initiale
- E2 : évaluation de performance
- E3 : sélection par tournois
- E4 : mutation et croisement
- E5 : production de génération suivante
- E6 : test de fin d'itérations
- E7 : placement de capteurs.

## Liste des documents cités

### Documents brevets

À toute fin utile, le(s) document(s) brevet(s) suivant(s) est (sont) cité(s) :

- patcit1 : FR 3 006 818 A1 (numéro de publication);
- patcit2 : CN107563550A (numéro de publication).

## Revendications

1. Procédé d'optimisation du positionnement de capteurs dans un réseau électrique (1) comprenant un ensemble de noeuds,

   lesdits capteurs étant configurés pour fournir des mesures de variables électriques dudit réseau,
   ledit procédé comprenant :

9

a. une génération aléatoire (E1) d'une population de première génération de solutions correspondant à un ensemble de positions possibles desdits capteurs au sein dudit ensemble de noeuds du réseau, une solution étant associée à un vecteur, appelé gène, représentatif desdites positions de capteurs au sein dudit réseau, et

b. au moins une itération de reproduction de ladite population, produisant à partir d'une population de génération de rang i ≥ 1 (Gen_i) une population de génération de rang i+1 (Gen_i+1), ladite reproduction comprenant :

    i. Une évaluation (E2) d'une performance des solutions de la population de la génération de rang i ;
    ii. Une sélection (E3) par tournois de solutions au sein de ladite population de la génération de rang i, par tirages aléatoire de couples de solutions dans ladite population et sélection d'une solution présentant la meilleure performance au sein de chaque couple tiré aléatoirement ;
    iii. Un croisement (E4) d'au moins certains couples de solutions sélectionnées générant chacun deux solutions filles ;
    iv. Une production (E5) d'une population de génération de rang i+1 comprenant au moins certaines solutions sélectionnées par tournois de la population de génération de rang i, lesdites solutions filles, et des solutions (14) générées aléatoirement, ladite population de génération de rang i+1 comprenant le même nombre de solutions que la population de génération de rang i ;

et ledit procédé comprenant, à l'issue (E6) de ladite au moins une itération de reproduction, un placement (E7) desdits capteurs au sein dudit réseau aux positions déterminées par un gène prédominant associé à une performance évaluée maximale au sein des solutions de la population de dernière génération.

2. Procédé d'optimisation selon la revendication 1, **caractérisé en ce que** ladite reproduction comprend également une mutation du gène d'au moins certaines des solutions filles.

3. Procédé d'optimisation selon l'une quelconque des revendications 1 et 2, **caractérisé en ce que** ladite reproduction comprend également une mutation du gène d'au moins certaines des solutions sélectionnées n'ayant pas subi de croisement.

4. Procédé d'optimisation selon l'une quelconque des revendications 1 à 3, **caractérisé en ce que** ledit gène est un vecteur contenant lesdites positions de capteurs au sein dudit réseau, classées par distance à un noeud le plus amont dans ledit réseau, et de longueur égale à un nombre desdits capteurs.

5. Procédé d'optimisation selon l'une quelconque des revendications 1 à 4, **caractérisé en ce que** ladite évaluation (E2) d'une performance d'une solution de la population de la génération de rang i met en oeuvre un calcul d'une fonction objectif définie par : $Perf(sol) = \sum_{n=1}^{N} \max \left( \left| \frac{loadflow(n) - estimation(n,sol)}{loadflow(n)} \right| \right)$ , où *Perf* désigne la performance de la solution *sol, N* est un nombre de points de fonctionnement étudiés, *loadflow*(*n*) associe à un point de fonctionnement n la valeur des variables électriques des noeuds dudit réseau calculées à partir de données de production et de consommation connues pour ledit réseau et *estimation(n, sol)* désigne pour le point de fonctionnement n la valeur des variables électriques des noeuds dudit réseau estimées à partir des mesures fournies par lesdits capteurs placés à l'ensemble de positions définies par le gène de la solution *sol* et **en ce qu'**une solution présente une performance d'autant meilleure qu'elle minimise la valeur de ladite fonction objectif calculée.

6. Procédé d'optimisation selon l'une quelconque des revendications 1 à 5, **caractérisé en ce que** ledit croisement de couples de solutions sélectionnées met en oeuvre un enjambement simple ou un enjambement double des gènes des solutions choisies de manière équiprobable à chaque couple de solutions sélectionnées.

7. Procédé d'optimisation selon l'une quelconque des revendications 1 à 6, **caractérisé en ce que** la mutation du gène d'une solution met en oeuvre un déplacement d'au moins un desdits capteurs d'un noeud initial vers un noeud final dudit réseau situé dans un voisinage dudit noeud initial, selon une probabilité décroissant avec une distance dudit noeud final par rapport audit noeud initial.

8. Procédé d'optimisation selon l'une quelconque des revendications 1 à 7, **caractérisé en ce que** ladite reproduction de population est itérée jusqu'à atteindre une génération de rang j= 0,15*Nb_sol*Nb_cap, où Nb_sol désigne le nombre de solutions de la population et où Nb_cap désigne le nombre de capteurs.

**9.** Programme informatique comportant des instructions pour la mise en oeuvre du procédé selon l'une des revendications 1 à 8 lorsque ce programme est exécuté par un processeur.

**10.** Support d'enregistrement non transitoire lisible par un ordinateur sur lequel est enregistré un programme pour la mise en oeuvre du procédé selon l'une des revendications 1 à 8 lorsque ce programme est exécuté par un processeur.

**FIGURE 1**

**FIGURE 2**

2

| Individu 1 : $f1$ | Individu 8 : $f8$ | $f8 > f1$ | Individu 1 |
| Individu 2 : $f2$ | Individu 9 : $f9$ | $f2 > f9$ | Individu 9 |
| Individu 3 : $f3$ | Individu 10 : f10 | $f3 < f10$ | Individu 3 |
| Individu 4 : $f4$ | Individu 11 : $f11$ | $f4 < f11$ | Individu 4 |
| Individu 5 : $f5$ | Individu 12 : $f12$ | $f5 > f12$ | Individu 12 |
| Individu 6 : $f6$ | Individu 13 : $f13$ | $f6 < f13$ | Individu 6 |
| Individu 7 : $f7$ | Individu 14 : $f14$ | $f7 < f14$ | Individu 7 |

3

**FIGURE 3**

8

4
5
6
7

**FIGURE 4**

**FIGURE 5**

**FIGURE 6**

**FIGURE 7**

Gen_i

14

E5

E5

Gen_i+1

13

E3

E4

13

E5

**FIGURE 8**

**FIGURE 9**

1

CMD

IN

OUT

PROC

MEM

**FIGURE 10**

Europäisches
Patentamt

European
Patent Office

Office européen
des brevets

**RAPPORT DE RECHERCHE EUROPEENNE**

Numéro de la demande

EP 24 21 5013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 3 006 818 A1 (ELECTRICITE DE FRANCE [FR] ET AL.) 12 décembre 2014 (2014-12-12) * abrégé * * revendications 1,2,9,10 * * pages 2-4 * ----- | 1-10 | INV. H02J3/00 G06N3/126 H02J13/00 |
| A | CN 107 563 550 A (UNIV WUHAN) 9 janvier 2018 (2018-01-09) * abrégé * * alinéas [0006], [0010] - [0015] * * revendication 1 * ----- | 1-10 | |
| A | EP 4 142 086 A1 (SIEMENS SANAYI VE TICARET A S [TR]) 1 mars 2023 (2023-03-01) * abrégé * * alinéas [0001], [0003] - [0006] * * alinéas [0007], [0011] - [0014], [0022] * * alinéas [0035] - [0042], [0139], [0178] - [0181] * * revendications 1-17 * ----- | 1-10 | |
| | | | DOMAINES TECHNIQUES RECHERCHES (IPC) |
| A | Anonymous: "Algorithme génétique - Wikipédia", , 17 mai 2018 (2018-05-17), XP055608601, Extrait de l'Internet: URL:https://fr.wikipedia.org/w/index.php?title=Algorithme_génétique&oldid=148568151 [extrait le 2019-07-24] * abrégé * * "Schéma récapitulatif"; pages 8-9 * * le document en entier * ----- | 1-10 | H02J G06N |

-/--

Le présent rapport a été établi pour toutes les revendications

| Lieu de la recherche | Date d'achèvement de la recherche | Examinateur |
|---|---|---|
| Munich | 4 avril 2025 | Fiat, Cyrille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 24 21 5013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 3 083 553 A1 (SUEZ GROUPE [FR]) 10 janvier 2020 (2020-01-10) * abrégé * * alinéas [0001] - [0189] * * revendications 1-17 * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 4 avril 2025 | Fiat, Cyrille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 24 21 5013

La présente annexe indique les membres de la famille de brevets relatifs aux documents  brevets cités dans le rapport de recherche européenne visé ci-dessus.

Lesdits members sont contenus au fichier informatique de l'Office européen des brevets à la date du

Les renseignements fournis sont donnés à titre indicatif et n'engagent pas la responsabilité de l'Office européen des brevets.

04-04-2025

| Document brevet cité au rapport de recherche | | Date de publication | Membre(s) de la famille de brevet(s) | | Date de publication |
|---|---|---|---|---|---|
| FR 3006818 | A1 | 12-12-2014 | AUCUN | | |
| CN 107563550 | A | 09-01-2018 | AUCUN | | |
| EP 4142086 | A1 | 01-03-2023 | AUCUN | | |
| FR 3083553 | A1 | 10-01-2020 | AU | 2019301845 A1 | 18-02-2021 |
| | | | CN | 112424599 A | 26-02-2021 |
| | | | EP | 3821239 A1 | 19-05-2021 |
| | | | FR | 3083553 A1 | 10-01-2020 |
| | | | US | 2021272028 A1 | 02-09-2021 |
| | | | WO | 2020011711 A1 | 16-01-2020 |

EPO FORM P0460

Pour tout renseignement concernant cette annexe : voir Journal Officiel de l'Office européen des brevets, No.12/82

# EP 4 564 630 A1

## RÉFÉRENCES CITÉES DANS LA DESCRIPTION

### Documents brevets cités dans la description

- FR 3006818 A1

- CN 107563550 A